# EUROPEAN PATENT SPECIFICATION

(11) **EP 4 492 843 B1**
(45) Date of publication and mention of the grant of the patent: **25.11.2026**
(21) Application number: 24217047.0
(22) Date of filing: 29.10.2020
(51) Int. Cl.: G06F 21/32, H04L 9/32, H04L 9/40, G06N 3/045, G06N 3/08, H04W 12/06, H04W 12/122

(54) **USING AN ENROLLED BIOMETRIC DATASET TO DETECT ADVERSARIAL EXAMPLES IN BIOMETRICS-BASED AUTHENTICATION SYSTEM**
VERWENDUNG EINES REGISTRIERTEN BIOMETRISCHEN DATENSATZES ZUR ERKENNUNG KONTRADIKTORISCHER BEISPIELE IN BIOMETRISCH BASIERTEM AUTHENTIFIZIERUNGSSYSTEM
UTILISATION D'UN ENSEMBLE DE DONNÉES BIOMÉTRIQUES ENREGISTRÉES POUR DÉTECTER DES EXEMPLES CONTRADICTOIRES DANS UN SYSTÈME D'AUTHENTIFICATION BIOMÉTRIQUE

(30) Priority: 15.11.2019 US 201916685203
(43) Date of publication of application: 15.01.2025
(62) Document number(s) of the earlier application(s) in accordance with Art. 76 EPC: 20886289.6 / 4 058 912
(73) Proprietor: Visa International Service Association, San Francisco, California 94128 (US)
(72) Inventor: WU, Yuhang, Foster City, CA 94404 (US); ARORA, Sunpreet, San Mateo, CA 94403 (US); YANG, Hao, San Jose, CA 95121 (US)
(74) Representative: EIP

(56) References cited:
- CN-B- 102 663 443
- US-A1- 2017 140 212
- GOSWAMI GAURAV ET AL: "Detecting and Mitigating Adversarial Perturbations for Robust Face Recognition", ARXIV.ORG, CORNELL UNIVERSITY LIBRARY, 201 OLIN LIBRARY CORNELL UNIVERSITY ITHACA, NY 14853, vol. 127, no. 6, 22 March 2019 (2019-03-22), pages 719 - 742, XP036863850, DOI: 10.1007/S11263-019-01160-W

## Description

### BACKGROUND

Adversarial machine learning is a technique employed in the field of machine learning which attempts to fool machine learning models through malicious input. Recent research has shown a susceptibility of deep neural networks to adversarial examples. Adversarial examples are inputs that are specifically crafted with a malicious intent. For a network trained to classify objects in an image, adversarial examples could be generated with the goal of misclassifying an object belonging to one category to a different category, such as one person modifying his/her image to impersonate another. Examples of adversarial examples include a machine-tweaked image of a dog that looked like a cat both to computers and to humans, and perturbing the appearance of a stop sign so that an autonomous vehicle will classify the stop sign as a merge or speed limit sign instead.

Over the past few years, several different methods to generate adversarial examples for deep neural networks have been published. Techniques have been also developed to defend against adversarial examples crafted using some of these methods. Most of these defensive techniques, however, though can be broken easily given the knowledge of the defense method. Document CN102663443B is regarded as being a relevant prior-art document.

Accordingly, it would be desirable to provide an improved system and method for detecting adversarial examples.

### BRIEF SUMMARY

The invention is defined by appended independent claims 1, 4 and 5.

Various embodiments provide methods and systems for improving security of a biometrics-based authentication system using an enrolled biometric dataset to detect adversarial examples. Aspects of the embodiments include receiving enrolled biometric samples of an enrolled user during an enrollment stage of the biometrics-based authentication system. Augmented biometric samples are created by adding learned perturbations to the enrolled biometric samples of the enrolled user. During a request for authentication, submitted biometric samples are received from a second user purporting to be the enrolled user. The submitted biometric samples of the second user are compared to the enrolled biometric samples and to the augmented biometric samples of the enrolled user based on predefined metrics. Based on the comparison it is determined whether the submitted biometric samples of the second user have been modified to impersonate the enrolled user.

According to the method and system disclosed herein, the exemplary embodiments improve adversarial defense techniques of biometric authentication systems in that adding the learned perturbations to the enrolled biometric samples of the enrolled user increases the difficulty of an adversary creating adversarial biometric samples even in the case where the enrollment biometric samples are leaked to the adversary via an insider breach.

### BRIEF DESCRIPTION OF SEVERAL VIEWS OF THE DRAWINGS

Figure 1 is a diagram illustrating one embodiment of a system for using an enrolled biometric dataset to detect adversarial examples in a biometrics-based authentication system.
Figure 2 is a diagram illustrating a generic authentication process performed by the biometric authentication system prior to activation of the adversarial defense system.
Figure 3 is a diagram illustrating an impersonation attack performed on a generic biometric authentication system.
Figure 4 is a flow diagram illustrating one embodiment of a process for improving security of a biometrics-based authentication system.
Figure 5 is a diagram illustrating detection of an impersonation attack on the biometric authentication system by the adversarial defense system in further detail.
Figure 6 is a diagram illustrating the process used by the adversarial perturbation detector to detect perturbations in the submitted biometric samples.
Figure 7 is a diagram illustrating embodiments performed by the adversarial perturbation detector to detect adversarial submitted biometric samples.
Figure 8A is a diagram illustrating a process for training the adversarial perturbation detector prior to deployment.
Figure 8B is a diagram illustrating an overview of the process of creating augmented biometric samples of the enrolled user (block 402 of Figure 4).

### DETAILED DESCRIPTION

The exemplary embodiments relate to using an enrolled biometric dataset to detect adversarial examples in biometrics-based authentication system. The following description is presented to enable one of ordinary skill in the art to make and use the invention and is provided in the context of a patent application and its requirements. Various modifications to the exemplary embodiments and the generic principles and features described herein will be readily apparent. The exemplary embodiments are mainly described in terms of particular methods and systems provided in particular implementations. However, the methods and systems will operate effectively in other implementations. Phrases such as "exemplary embodiment", "one embodiment" and "another embodiment" may refer to the same or different embodiments. The embodiments will be described with respect to systems and/or devices having certain components. However, the systems and/or devices may include more or less components than those shown, and variations in the arrangement and type of the components may be made without departing from the scope of the invention. The exemplary embodiments will also be described in the context of particular methods having certain steps. However, the method and system operate effectively for other methods having different and/or additional steps and steps in different orders that are not inconsistent with the exemplary embodiments. Thus, the present invention is not intended to be limited to the embodiments shown, but is to be accorded the widest scope consistent with the principles and features described herein.

The disclosed embodiments relate to using an enrolled biometric dataset to detect adversarial examples in a biometrics-based authentication system. Applicants recognize that one way to design stronger defense mechanisms is to incorporate domain knowledge. According to the disclosed embodiments, domain knowledge is used in a biometric verification setting to design a strong defense mechanism from adversarial biometric samples. More specifically, security of a biometrics-based authentication system is improved by using enrolled biometric samples of a user to detect adversarial biometric samples crafted specifically to target the enrolled user's identity. It is assumed that the adversary crafting the adversarial biometric samples does not have access to the enrolled biometric samples. However, augmented biometric samples with learned perturbations (realistic or synthetic) are added to the enrolled biometric samples with the aim of increasing the difficulty of crafting adversarial biometric samples if the enrolled biometric samples are accessed by an adversary due to, for example, an insider data breach. The enrolled biometric samples with the augmented enrolled biometric samples are compared with the adversarial biometric samples based on different pre-defined metrics. Based on the comparison, a decision is made whether the adversarial biometric samples have been modified to impersonate the enrolled user.

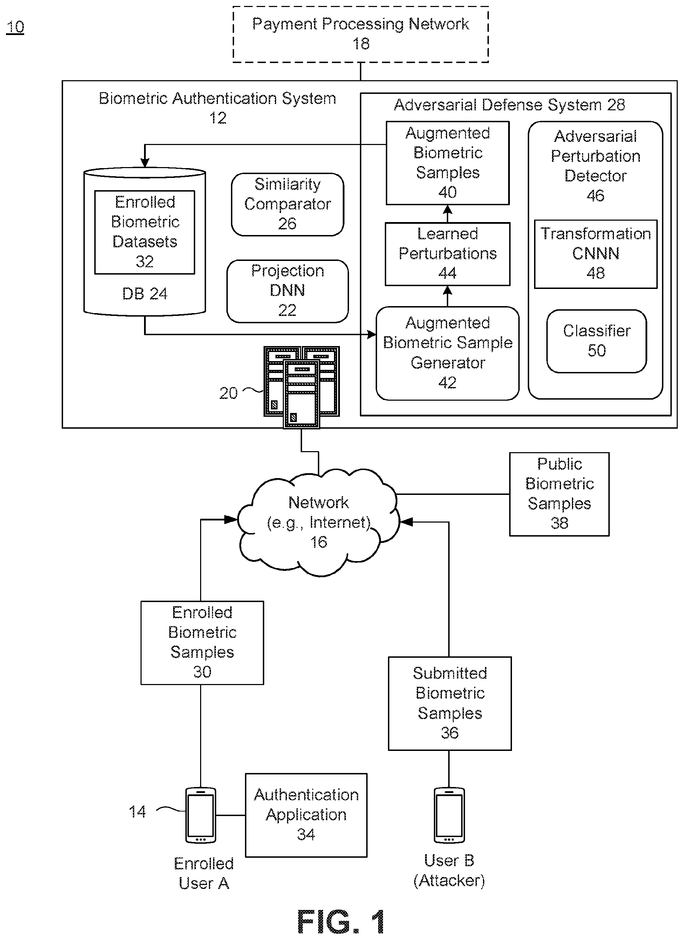

Figure 1 is a diagram illustrating one embodiment of a system for using enrolled biometric dataset to detect adversarial examples in a biometrics-based authentication system. The system 10 includes a biometric authentication system 12 in communication with the user devices 14 over a network 16, such as the Internet. Components of the biometric authentication system 12 may include one or more processors or servers 20, a projection deep neural network (DNN) 22, an enrollment database 24, a similarity comparator 26 and an adversarial defense system 28.

In one embodiment, the biometric authentication system 12 may be the front end for another system, such as a payment processing network 18, to authenticate users for a transaction. The payment processing network 18 may refer to an entity that receives transaction authorization requests from merchants or other entities and provides guarantees of payment, in some cases through an agreement between the transaction service provider and an issuer institution. The payment processing network supports and delivers payment related services (e.g., authentication services, authorization services, exception file services, and clearing and settlement services, etc.). Examples of a payment processing network may include a payment network provided by Visa^{®}, MasterCard^{®}, American Express^{®}, or any other entity that processes credit card transactions, debit card transactions, and other types of commercial transactions.

The biometric authentication system 12 acquires biometric samples of a first user (e.g., enrolled user A) during an enrollment stage. The enrollment stage may be performed through a software authentication application 34 provided by the biometric authentication system 12 that runs on either one of the servers 20 or a user device 14 (e.g., smartphone, PC, watch or tablet). During the enrollment process the authentication application 34 prompts the enrolled user to create enrolled biometric samples 30, which in one embodiment, are images of the user's face/head. In one embodiment, the images may be taken with the user device 14, and the authentication application 34 transmits the enrolled biometric samples 30 to the biometric authentication system 12 over the network 16, where they are received by one of the servers 20. The enrolled biometric samples 30 are processed by a projection DNN 22 into enrolled biometric dataset 32 and stored in the enrollment database 24, as explained further below.

Subsequently, the biometric authentication system 12 receives an authentication request from a second user (user B). The authentication request transmitted from the second user includes submitted biometric samples 36. The request can be made by the enrolled user or another user, e.g., user B, or user B may be an attacker purporting to be the enrolled user. The submitted biometric samples 36 are processed by the projection DNN 22 into submitted biometric datasets (not shown) and the similarity comparator 26 compares the enrolled biometric datasets 32 of the enrolled user to the submitted biometric datasets. If there is a match within one or more thresholds, the user is authorized and gains access to the payment processing network 18. If not, authorization request of the second user is rejected.

Before describing the adversarial defense system 28 that enhances security of the biometric authentication system 12, the authentication process performed by the biometric authentication system 12 and attacks thereon are first explained.

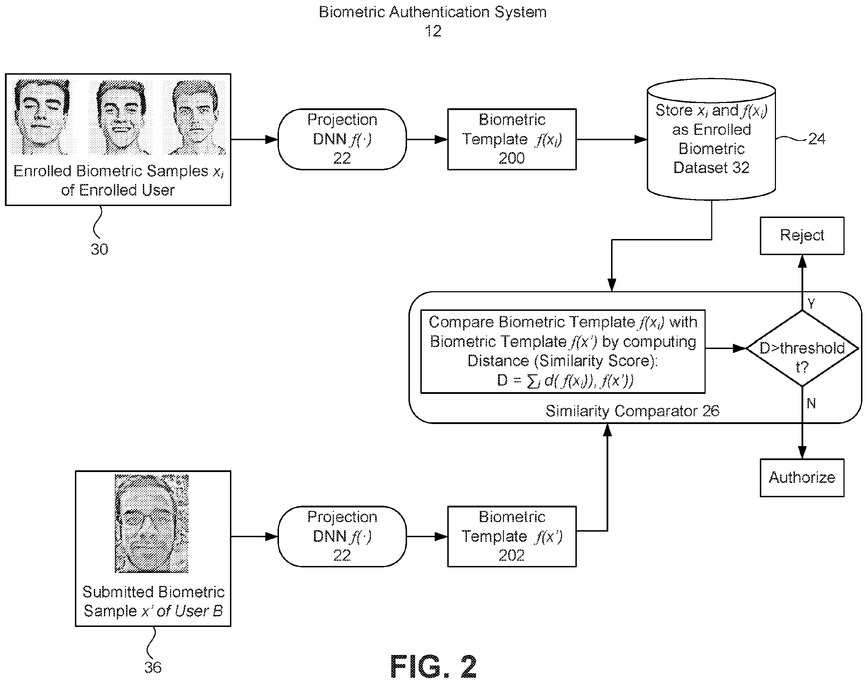

Figure 2 is a diagram illustrating a generic authentication process performed by the biometric authentication system 12 prior to activation of the adversarial defense system 28, where like components from Figure 1 have like reference numerals. Referring to both Figures 1 and 2, the biometric authentication system 12 receives the enrolled biometric samples 30, represented as xᵢ, of the enrolled user. The enrolled biometric samples xᵢ may be one or many samples. The projection DNN 22 applies a mapping function f(·) to the enrolled biometric samples 30 to generate a biometric template f(xᵢ) 200, which can be a one dimensional feature vector or a high dimensional tensor. The enrolled biometric samples xᵢ and the biometric template f(xᵢ) 200 are stored as the enrolled biometric dataset 32 in the enrollment database 24.

Similarly, the biometric authentication system 12 receives the submitted biometric sample x' 36 (one or many) from the same or a second user. The projection DNN 22 applies the same mapping function f(·) to the submitted biometric samples 36 to generate a biometric template f(x') 202. The mapping function f(·) projects xᵢ and x' to a common embedding subspace.

The similarity comparator 26 then compares the biometric template f(xᵢ) 200 with the biometric template f(x') 202 in the embedding subspace. This is done by computing a distance between the biometric template 200 and biometric template 202. The distance may be represented as similarity score or distance score, such that D = ∑ᵢ d( f(x)), f(x')). If the similarity comparator 26 determines that the distance D is greater than a first threshold (t), the authorization request is rejected. Otherwise, the authentication request is authorized.

Referring again to Figure 1, the enrolled user may further have public biometric samples 38 that are easier for an attacker to obtain than the enrolled biometric samples 30 that are stored on the user device 14 and/or in the enrollment database 24. For example, the enrolled user may have images stored on social media websites that are publically available to others to see. As explained below, the presence of public biometric samples 38 presents a security risk as an attacker can gain access to, and modify, the public biometric samples 38 to attack the biometric authentication system 12.

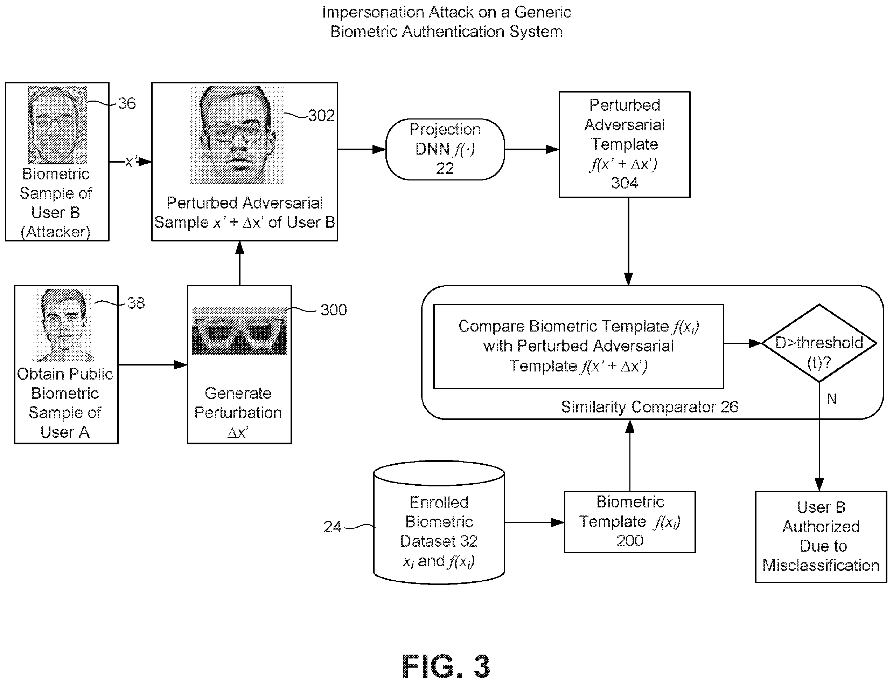

Figure 3 is a diagram illustrating an impersonation attack performed on a generic biometric authentication system. Figure 3 assumes an attacking second user targets the enrolled user for impersonation and that the biometric information of the attacking second user is represented by biometric sample x'. The second user first obtains the public biometric sample 38 of the enrolled user. The second user then computes a similarity between the biometric template 200 of the enrolled user and a biometric template of the attacker (not shown). Based on the similarity, the attacker uses the public biometric sample 38 to create a perturbation Δx' 300 that will be added to the attacker's biometric sample x' to generate a perturbed adversarial sample x' + Δx' 302. The perturbed adversarial sample x' + Δx' 302 of the attacker is designed to minimizes the distance between perturbed adversarial sample x' + Δx' 302 and the enrolled biometric samples xᵢ of the targeted enrolled user. The perturbation Δx' 300 is computed based on standard attacking methods such as the Fast Gradient Signed Method (FGSM), projected gradient descent (PGD) attack, Carlini-Wagner (CW) loss function, and the like to minimize the distance: *d(*(*f(x'+* Δ*x'*), *f*(*x*)) or *d*((*f(x'+* Δ*x'*), *f*(*xᵢ*)).

The perturbation Δx' 300 may be crafted based either on the public biometric samples 38 or the enrolled biometric samples 30 if obtainable (e.g. during a breach of the enrollment database 24 or the user device 14 of the enrolled user). Due to the transferability of adversarial perturbation, even though the perturbation Δx' is crafted based on the public biometric samples 38 of the enrolled user, the perturbation Δx' can be used to attack the enrolled biometric samples 30. The perturbation Δx' 300 may be physical or digital. In the example shown, the perturbation Δx' 300 comprises cardboard glasses that are worn by the second user when taking biometric sample images to generate the perturbed adversarial sample x' + Δx' 302.

After the perturbed adversarial sample x' + Δx' 302 is captured and submitted to the biometric authentication system, the projection DNN 22 applies the same mapping function f(·) to the perturbed adversarial sample x' + Δx' 302 to generate a perturbed adversarial template f(x' + Δx') 304. The similarity comparator 26 then compares the biometric template f(xᵢ) 200 of the enrolled user with the perturbed adversarial template f(x' + Δx') 304 in the embedding subspace. However, in this case since the perturbed adversarial template f (x' + Δx') 304 is designed to be close in distance to the biometric template f(xᵢ) 200, the similarity comparator 26 misclassifies and authorizes the attacking second user because the distance D or similarity score is less than the threshold t, i.e., Σᵢ *d*(*f*(*x*ᵢ*), f*(*x' +* Δ*x'*)) < t. Thus, in this approach, the attacker uses a well-crafted perturbed adversarial biometric sample 302 to impersonate the enrolled user to attack the generic authentication system and generate a fraudulent transaction once authenticated.

Referring again to Figure 1, according to the disclosed embodiments, the adversarial defense system 28 is added to the biometric authentication system 12 (e.g., facial image, voice, fingerprint, etc.) to improve the security of the biometric authentication system 12 by defending against the use of adversarial samples of an attacker. As described herein, the adversarial defense system 28 uses the enrolled biometric samples 30 from the enrolled user to detect any fraudulently submitted biometric samples 36. In one embodiment the biometric samples may comprise a facial image, but may represent other types of biometric data such as voice, fingerprints, and the like.

In one embodiment, the adversarial defense system 28 may include an augmented biometric sample generator 42 that uses and modifies the enrolled biometric dataset 32 of the enrolled user to include: (i) the one or more enrolled biometric samples 30 of the enrolled user acquired during in the enrollment stage, which are difficult to obtain by the attacker, and (ii) augmented biometric samples 40 (can be both realistic or synthesized) created from the enrolled biometric samples 30 or the public biometric samples 38 that increase the difficulty of crafting perturbed adversarial samples 302 should the enrollment biometric dataset 32 be leaked due to an insider data breach. In one embodiment, the augmented biometric sample generator 42 adds learned perturbations 44 to the enrolled biometric samples 30 to generate the augmented biometric samples 40.

In one embodiment, the projection DNN 22, the similarity comparator 26, and the adversarial defense system 28 are implemented as software components. In another embodiment, the components could be implemented as a combination of hardware and software. Although the projection DNN 22, the similarity comparator 26, and the adversarial defense system 28 are shown as separate components, the functionality of each may be combined into a lesser or greater number of modules/components. In addition, although one or more servers 20 are described as running the projection DNN 22, the similarity comparator 26, and the adversarial defense system 28, such components may be run on any type of one more computers that have a non-transitory memory and processor.

Both the server 20 and the user devices 14 may include hardware components of typical computing devices (not shown), including a processor, input devices (e.g., keyboard, pointing device, microphone for voice commands, buttons, touchscreen, etc.), and output devices (e.g., a display device, speakers, and the like). The server 20 and user devices 14 may include computer-readable media, e.g., memory and storage devices (e.g., flash memory, hard drive, optical disk drive, magnetic disk drive, and the like) containing computer instructions that implement the functionality disclosed when executed by the processor. The server 20 and the user devices 14 may further include wired or wireless network communication interfaces for communication. It should be understood that the functions of the software components may be implemented using a different number of software components than that shown.

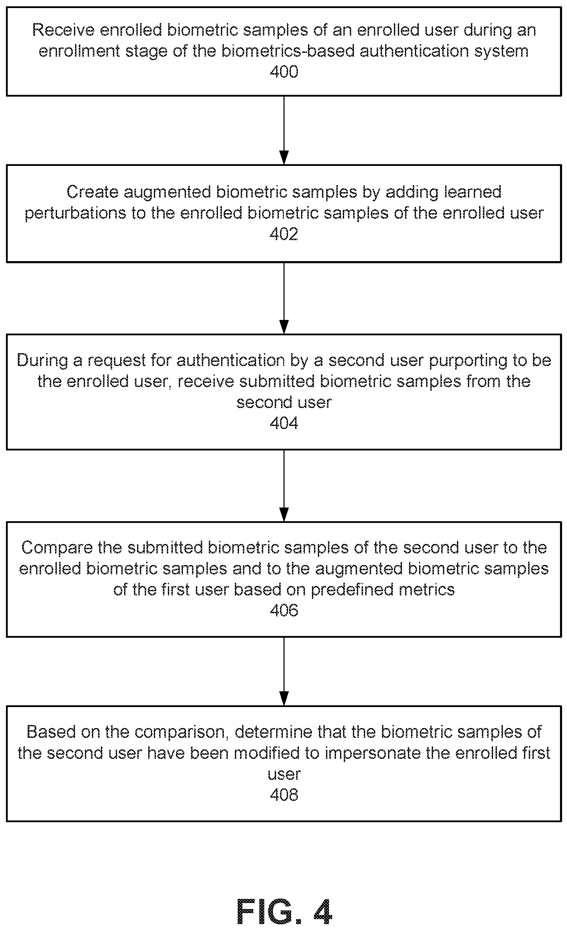

Figure 4 is a flow diagram illustrating one embodiment of a process for improving security of a biometrics-based authentication system. The process may begin by one or more servers 20 obtaining the enrolled biometric samples 30 of an enrolled user during the enrollment stage of the biometrics-based authentication system (block 400). Augmented biometric samples 40 are created by adding learned perturbations 44 to the enrolled biometric samples 30 of the enrolled user (block 402). In one embodiment, the augmented biometric sample generator 42 executing on one or more processors or servers generates and adds the learned perturbations 44 to the enrolled biometric samples 30 to create the augmented biometric samples 40.

Thereafter, during a request for authentication by a second user purporting to be the enrolled user, the one or more servers 20 receive submitted biometric samples 36 from the second user (block 404).

In response, the submitted biometric samples 36 of the second user are compared to the enrolled biometric samples 30 and to the augmented biometric samples of the enrolled user based on predefined metrics (block 406). In one embodiment, 46 may be implemented by the similarity comparator 26 executing on the one or more processors or servers 20.

Based on the comparison, it is determined that the biometric samples of the second user have been modified with a perturbation 300 to impersonate the enrolled user (block 408). In one embodiment, block 408 may be implemented by the adversarial perturbation detector 28 executing on the one or more processors or servers 20. Referring again to Figure 1, in one embodiment, the adversarial defense system 28 may further comprises an adversarial perturbation detector 46 to determine if the submitted biometric samples 36 of the second user have been modified with a perturbation. In one embodiment, the adversarial perturbation detector 46 may include a transformation convolutional neural network (CNN) 48 and a classifier 50 (e.g. a neural network), as described further below.

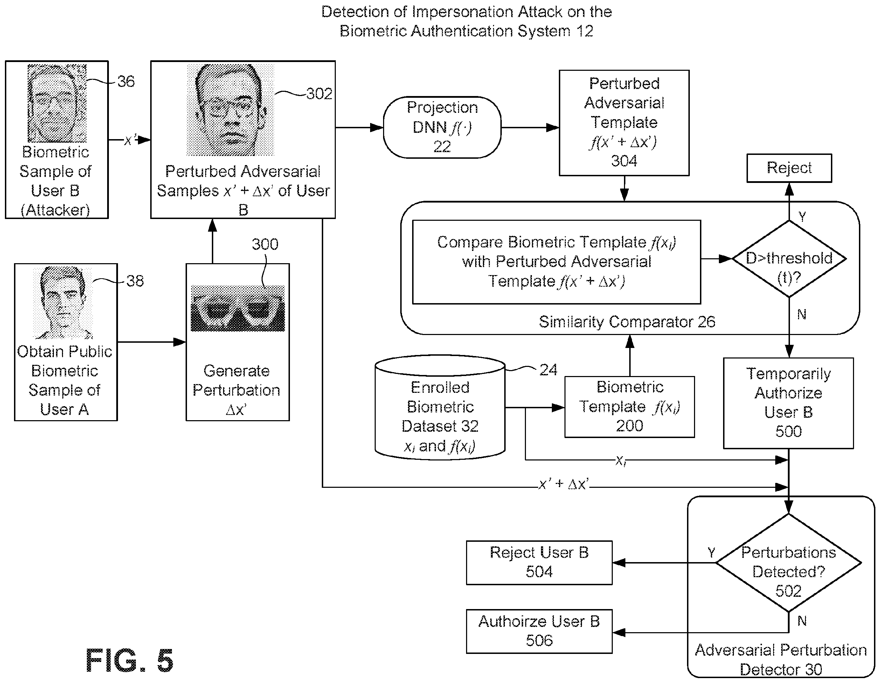

Figure 5 is a diagram illustrating detection of an impersonation attack on the biometric authentication system by the adversarial defense system in further detail. The process begins similar to the process described in Figure 3 in which the attacker (user B) obtains the public biometric sample 38 of the enrolled user; computes a similarity between the biometric template 200 of the enrolled user and a biometric template of the attacker (not shown); and based on the similarity, the public biometric sample 38 is used to create a perturbation Δx' 300 that will be added to the attacker's biometric sample x' to generate a perturbed adversarial sample x' + Δx' 302. Detection of an impersonation attack involves detecting that the submitted biometric samples 36 of the second user comprises one or more perturbed adversarial samples x' + Δx' 302.

First, the submitted biometric sample 36 comprising the perturbed adversarial sample x' + Δx' 302 is received by the biometric authentication system 12, and the projection DNN 22 applies the mapping function f(·) to the perturbed adversarial sample x' + Δx' 302 to generate the perturbed adversarial template f(x' + Δx') 304. The similarity comparator 26 then compares the biometric template f(xᵢ) 200 of the enrolled user from the enrollment database 24 with the perturbed adversarial template f(x' + Δx') 304 in the embedding subspace by calculating the distance score as described in Figure 2. However, in this case since the perturbed adversarial template f(x' + Δx')304 is designed to be close in distance to the biometric template f(xᵢ) 200, the similarity comparator 26 authorizes the attacking second user.

According to one aspect of the disclosed embodiments, the adversarial perturbation detector 28 is activated only in response to the request for authentication by second user being temporarily authorized by the biometric authentication system 12 via the similarity comparator 26 (block 500). According to one aspect of the disclosed embodiments, the adversarial perturbation detector 28 uses the enrolled biometric samples *xᵢ* 30 of the enrolled user, which are hidden/inaccessible by the second user, to detect whether adversarial samples were submitted by the second user. During a training stage, the adversarial perturbation detector 28 uses the enrolled biometric samples 30 at least in part to create the augmented biometric samples 40 by adding learned perturbations 44 to the enrolled biometric samples 30. The augmented biometric samples 40 are then added to the enrolled biometric samples 30.

In addition to the enrolled biometric sample *xᵢ* 30, the adversarial perturbation detector 28 receives as input the submitted biometric samples 36 of the second user, which comprise perturbed adversarial samples x' + Δx' 302, and determines if any perturbation are detected (block 502). Responsive to detecting any perturbations in the submitted biometric samples 36, the adversarial perturbation detector 28 rejects the authorization request of the second user (block 504). Otherwise the authorization request is granted and the second user is authorized.

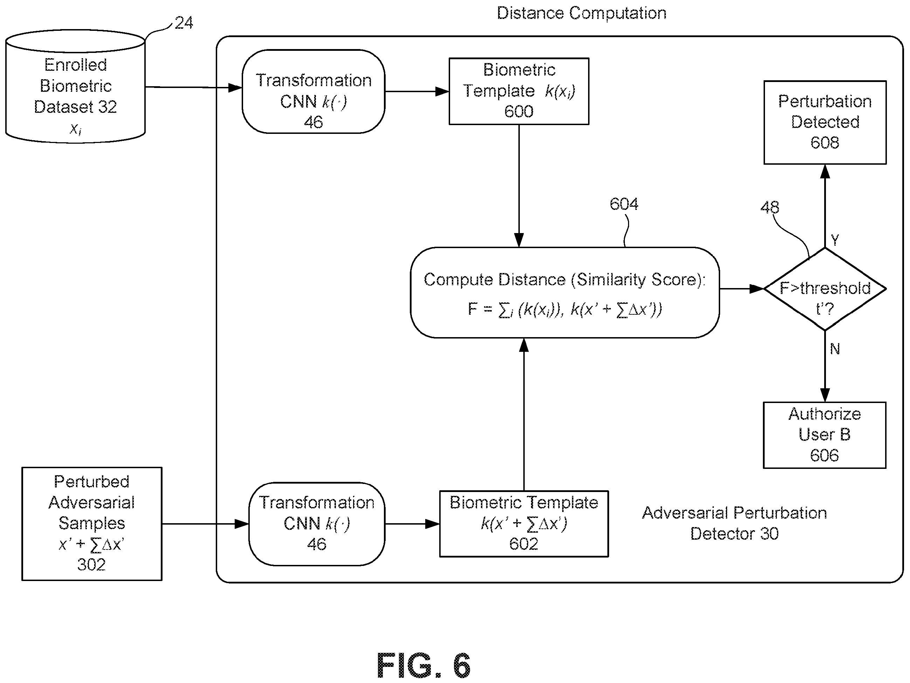

Figure 6 is a diagram illustrating the process used by the adversarial perturbation detector 28 to detect whether the submitted biometric samples 36 have been modified with perturbations. In this embodiment, the submitted biometric samples 36 of the second user are adversarial in that they have been altered with perturbations and now comprise perturbed adversarial samples f(x' + Δx') 282.

The process may begin by the adversarial perturbation detector 28 accessing the enrolled biometric dataset 32 from the enrollment database 24 to aid in detecting adversarial samples. The enrolled biometric dataset 32 includes images with the learned perturbations 44. Thus the enrolled biometric dataset 32 comprises *xᵢ* samples/images, where *i ∈* {1: *N*}*.* Similarly, the perturbed adversarial samples x' + Δx' 302 may include multiple perturbations, shown as ΣΔx', where Σ is a summation.

According to a further aspect of the disclosed embodiments, the adversarial perturbation detector 28 further includes a transformation CNN 48 that has a learned mapping function k(·) configured to maximize the summation of distance Σ*ᵢ d*(*k*(*x' +* Δ*x*') *- k(xᵢ*)), *i∈*{1: *M*}*.* The adversarial perturbation detector 28 receives the enrolled biometric samples 30 comprising *xᵢ* of the enrolled user and the perturbed adversarial samples x' + ΣΔx' 302 of the second user for transformation into a transformed subspace. In one embodiment, this may be done by using transformation CNN 48 to apply function *k(·)* to the enrolled biometric samples *xᵢ* 30 and the perturbed adversarial samples x' + ΣΔx' 302 to generate biometric template k(xᵢ) 600 and a biometric template k(x' + ∑Δx') 602, which are in the transformed subspace. In embodiments, the mapping function *k(·)* can be decomposed into multiple projections: k = g₁ ∘ g₂ ∘ g₃..., where g₁ can be layer in a convolutional neural network, g₂ can be another layer in the convolutional network, and g₃ can be a non-linear projection in a support vector machine (SVM).

The adversarial perturbation detector 28 then computes a distance (similarity score) between biometric template k(xᵢ) 600 and a biometric template k(x' + ∑Δx') 602 in the transformed subspace (block 604). In one embodiment the distance F can be computed as: F = Σᵢ *d*(*k*(*xᵢ*)*, k(x' +* Σ Δ*x'*))*.* The classifier 50 determines that the biometric template k(x' + ∑Δx') 602, and therefore the submitted biometric samples 36 of the second user, is adversarial when the computed distance F is greater than a second threshold t', indicating that one or more perturbations have been detected in the perturbed adversarial biometric samples 302 (block 608). Otherwise the second user is authorized (block 606).

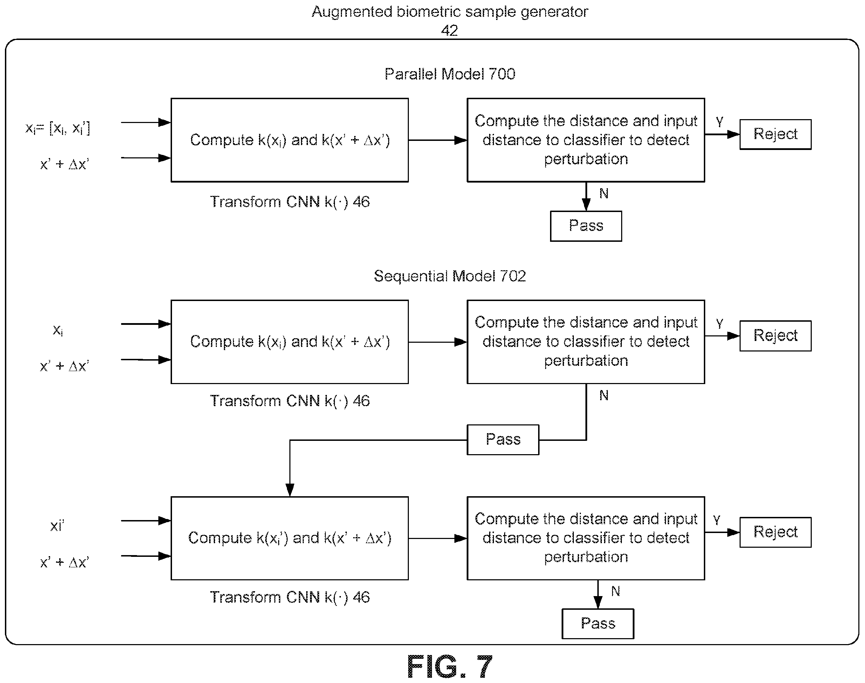

Figure 7 is a diagram illustrating embodiments performed by the adversarial perturbation detector 28 to detect adversarial submitted biometric samples when the enrolled biometric dataset xᵢ 32 includes augmented biometric samples xᵢ' such that the enrolled biometric samples xᵢ = [xᵢ, xᵢ'].

In one embodiment, the adversarial perturbation detector 28 may be deployed using a parallel model 700 (also shown in Figure 5) in which the xᵢ and xᵢ' of the enrolled biometric samples 30 are input to the transform CNN k(·) in parallel along with the perturbed adversarial samples x' + Δx' 302 of the second user to compute k(xᵢ) and k(x' + Δx'). The adversarial perturbation detector 28 then computes the distance score and inputs the distance score to the classifier 50 to make a final decision of whether a perturbation as detected.

In another embodiment, the adversarial perturbation detector 28 may be deployed using a sequential model 702 in which the xᵢ and learned perturbations xᵢ' of the enrolled biometric samples 30 are input sequentially to the transform CNN 48. In the sequential model 702, zᵢ is inputted to the transform CNN 48 with the perturbed adversarial samples z' + Δz' 302 to compute k(zᵢ) and k(z' + Δz'). The adversarial perturbation detector 28 then computes the distance score and uses the classifier 50 to determine whether a perturbation as detected. If no perturbation is detected, then the learned perturbations zᵢ' of the enrolled biometric samples 30 is input to the transform CNN 48 with the perturbed adversarial samples z' + Δz' 302 to compute k(zᵢ') and k(z' + Δz'). The adversarial perturbation detector 28 then computes the distance score and uses the classifier 50 to make a final decision of whether a perturbation as detected.

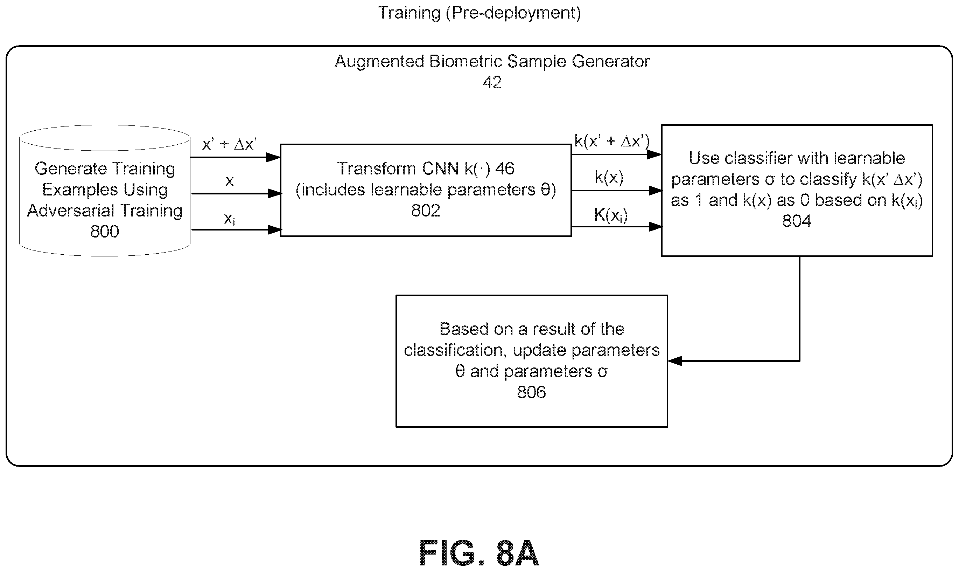

Figure 8A is a diagram illustrating a process for training the adversarial perturbation detector 28 prior to deployment. The training process may begin by generating trained examples using adversarial training (block 800) in one embodiment, the training examples include training enrolled biometric samples xᵢ, training public biometric samples x, and training perturbed adversarial samples x' + Δx'.

Next, the process learns parameters for the transform CNN k(·) 46 and classifier 50 by inputting the training examples are input to the transform CNN k(·) 46, where k(·) has learnable parameters θ (block 802). The process generates a training enrolled biometric template k(xᵢ), a training public biometric template k(x), and a training perturbed adversarial template k(x' + Δx'). In embodiments, the mapping function k(·) can be decomposed into multiple projections: k = g1 ∘ g2 ∘ g3..., where g1 can be a layer in a convolutional neural network, g2 can be another layer in the convolutional network, and g3 can be a non-linear projection in a support vector machine (SVM).

Next the classifier 50 with learnable parameters σ is used to classify the training perturbed adversarial template k(x' + Δx') as a 1 and training public biometric template k(x) as 0 based on training enrolled biometric template k(xᵢ) (block 804). In embodiments, the classifier may be the same or different than classifier 50. The classifier may be a deep neural network or a threshold-based classifier: ∑ᵢ d(k(xᵢ), k(x' + Σ Δx')) < third threshold t", it depends on the output of k(). In either case, the classifier needs to contain an aggregation function (e.g., ∑ᵢ) to merge the results of xᵢ. Based on a result of the classification, the learnable parameters θ and σ are updated and process may repeat as necessary.

Another operation of the training process is to create the augmented biometric samples 40 by adding learned perturbations 44 to the enrolled biometric samples 30 of the enrolled user as described in block 402 of Figure 4.

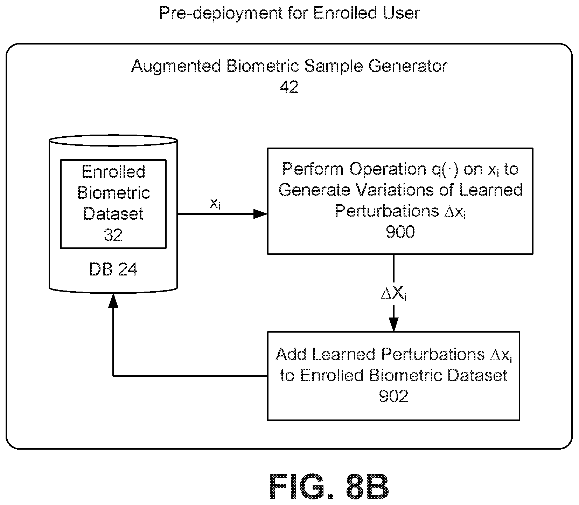

Figure 8B is a diagram illustrating an overview of the process of creating augmented biometric samples 40 of the enrolled user (block 402 of Figure 4). In one embodiment, the process of creating the augmented biometric samples 40 is performed after enrollment of each new user, but before the adversarial perturbation detector 28 is deployed to authenticate the new enrolled user.

The process may include by retrieving the enrolled biometric data set xᵢ 32 for the enrolled user from the enrollment database 24 and performing an operation q(·) on xᵢ to generate variations of the learned perturbations Δxᵢ (block 900). Operations in q(·) may increase the intra-class distances between xᵢ, such as by generating random noise on the enrollment images. In an alternative embodiment, an image may be selected from the public biometric samples x 38, and generate adversarial images based on xᵢ to slightly increase the distance: d(k(x), k(xᵢ + Δxᵢ)) to obtain Δxᵢ. The learned perturbations Δxᵢ are then added to the enrolled biometric data set 902 for the enrolled user (block 902).

According the disclosed embodiments, adding the learned perturbations Δxᵢ that are added to xᵢ may increase the difficulty of creating adversarial biometric samples even in the case where the enrollment set is leaked to an adversary during an insider breach so that: ${\sum }_{⋅} d \left(k\left(Δx′+x′\right)-k\left({x}_{i}+Δ{x}_{i}\right)\right) > {\sum }_{⋅} \left(k\left(Δx′+x′\right)-k\left({x}_{i}\right)\right) .$

A method and system for using an enrollment set to detect adversarial examples in biometrics-based authentication system has been disclosed. The present invention has been described in accordance with the embodiments shown, and there could be variations to the embodiments, and any variations would be within the scope of the present invention. For example, the exemplary embodiment can be implemented using hardware, software, a computer readable medium containing program instructions, or a combination thereof. Accordingly, many modifications may be made by one of ordinary skill in the art without departing from the scope of the appended claims.

## Claims

1. A method for training an adversarial perturbation detector (28), the adversarial perturbation detector being executed on one or more processors or servers and comprising:
a transformation function (46) having a first learnable parameter (θ), and
a classifier (50) having a second learnable parameter (σ),
the method comprising:
inputting training examples to the transformation function (k(·)), the training examples including a training enrolled biometric sample (xᵢ), a training public biometric sample (x), and a training perturbed adversarial sample (x' + Δ*x'*), thereby to generate a training enrolled biometric template (k(xᵢ)), a training public biometric template (k(x)) and a training perturbed adversarial template (k(x' +Δx'));
using the classifier to determine whether to classify the training perturbed adversarial template as adversarial and whether to classify the training public biometric template as adversarial, based on the training enrolled biometric template; and
based on a result of the classification, updating the first learnable parameter (θ) and the second learnable parameter (σ).

2. The method of any of the preceding claims, wherein the transformation function is a transformation convolutional neural network (CNN).

3. The method of any of the preceding claims, comprising:
receiving biometric samples (30) of an enrolled user and perturbed adversarial biometric samples (302) of a second user;
applying the transformation function to the biometric samples of the enrolled user to generate an enrolled biometric template (600);
applying the transformation function to the perturbed adversarial biometric samples to generate a perturbed adversarial biometric template (602), the enrolled biometric template and the perturbed adversarial biometric template being in a transformed subspace;
computing a distance (F) between the enrolled biometric template and the perturbed adversarial template in the transformed subspace; and
determining that the perturbed adversarial biometric template and the perturbed adversarial samples are adversarial when the computed distance is greater than a threshold (t').

4. A non-transitory computer readable medium having stored thereon software instructions that, when executed by a processor, cause the processor to perform the method of any one of the preceding claims.

5. A system, comprising:
a memory;
a processor coupled to the memory; and
a software component executed by the processor that is configured to perform the method of any one of claim 1 to claim 3.

## Patentansprüche

1. Verfahren zum Trainieren eines adversarialen Störungsdetektors (28), wobei der adversariale Störungsdetektor auf einem oder mehreren Prozessoren oder Servern ausgeführt wird und Folgendes aufweist:
eine Transformationsfunktion (46) mit einem ersten lernfähigen Parameter (θ) und
einen Klassifizierer (50) mit einem zweiten lernfähigen Parameter (σ), wobei das Verfahren Folgendes umfasst:
Eingeben von Trainingsbeispielen in die Transformationsfunktion (k(·)), wobei die Trainingsbeispiele eine registrierte Trainings-Biometrieprobe (xᵢ), eine öffentliche Trainings-Biometrieprobe (x) und eine gestörte adversariale Trainingsprobe (x' + Δx') umfassen, um dadurch eine registrierte Trainings-Biometrievorlage (k(xᵢ)), eine öffentliche Trainings-Biometrievorlage (k(x)) und eine gestörte adversariale Trainingsvorlage (k(x' + Δx')) zu erzeugen;
Verwenden des Klassifizierers, um zu bestimmen, ob die gestörte adversariale Trainingsvorlage als adversarial zu klassifizieren ist und ob die öffentliche Trainings-Biometrievorlage als adversarial zu klassifizieren ist, basierend auf der registrierten Trainings-Biometrievorlage; und
basierend auf einem Ergebnis der Klassifizierung, Aktualisieren des ersten lernfähigen Parameters (θ) und des zweiten lernfähigen Parameters (σ).

2. Verfahren nach einem der vorhergehenden Ansprüche, wobei die Transformationsfunktion ein Transformations-Convolutional Neural Network (CNN) ist.

3. Verfahren nach einem der vorstehenden Ansprüche, umfassend:
Empfangen biometrischer Proben (30) eines registrierten Benutzers und gestörter adversarialer Biometrieproben (302) eines zweiten Benutzers;
Anwenden der Transformationsfunktion auf die biometrischen Proben des registrierten Benutzers, um eine registrierte Biometrievorlage (600) zu erzeugen;
Anwenden der Transformationsfunktion auf die gestörten adversarialen Biometrieproben, um eine gestörte adversariale Biometrievorlage (602) zu erzeugen, wobei die registrierte Biometrievorlage und die gestörte adversariale Biometrievorlage in einem transformierten Unterraum liegen;
Berechnen eines Abstands (F) zwischen der registrierten Biometrievorlage und der gestörten adversariellen Vorlage im transformierten Unterraum; und
Bestimmen, dass die gestörte adversarielle Biometrievorlage und die gestörten adversariellen Proben adversariell sind, wenn der berechnete Abstand größer als ein Schwellenwert (t') ist.

4. Nichtflüchtiges computerlesbares Medium, auf dem Softwareanweisungen gespeichert sind, die, bei Ausführung durch einen Prozessor, den Prozessor veranlassen, das Verfahren nach einem der vorhergehenden Ansprüche auszuführen.

5. System, umfassend:
einen Speicher;
einen Prozessor, der mit dem Speicher gekoppelt ist; und
eine Softwarekomponente, die durch den Prozessor ausgeführt wird, die konfiguriert ist, das Verfahren nach einem der Ansprüche 1 bis 3 auszuführen.

## Revendications

1. Procédé pour l'entraînement d'un détecteur de perturbations adverses (28), le détecteur de perturbations adverses étant exécuté sur un ou plusieurs processeurs ou serveurs et comprenant :
une fonction de transformation (46) ayant un premier paramètre apprenable (θ), et
un classificateur (50) ayant un deuxième paramètre apprenable (σ),
le procédé comprenant :
la fourniture en entrée d'exemples d'entraînement dans la fonction de transformation (k(·)), les exemples d'entraînement comportant un échantillon biométrique enrôlé d'entraînement (xᵢ), un échantillon biométrique public d'entraînement (x) et un échantillon perturbé de manière adverse d'entraînement (x' + Δx'), pour ainsi générer un modèle biométrique enrôlé d'entraînement (k(xᵢ)), un modèle biométrique public d'entraînement (k(x)) et un modèle perturbé de manière adverse d'entraînement (k(x' + Δx')) ;
l'utilisation du classificateur pour déterminer s'il faut classer le modèle perturbé de manière adverse d'entraînement comme étant adverse et s'il faut classer le modèle biométrique public d'entraînement comme étant adverse, sur la base du modèle biométrique enrôlé d'entraînement ; et
sur la base d'un résultat de la classification, la mise à jour du premier paramètre apprenable (θ) et du deuxième paramètre apprenable (σ).

2. Procédé selon l'une quelconque des revendications précédentes, dans lequel la fonction de transformation est un réseau neuronal convolutif (CNN) de transformation.

3. Procédé selon l'une quelconque des revendications précédentes, comprenant :
la réception d'échantillons biométriques (30) d'un utilisateur enrôlé et d'échantillons biométriques perturbés de manière adverse (302) d'un deuxième utilisateur ;
l'application de la fonction de transformation aux échantillons biométriques de l'utilisateur enrôlé pour générer un modèle biométrique enrôlé (600) ;
l'application de la fonction de transformation aux échantillons biométriques perturbés de manière adverse pour générer un modèle biométrique perturbé de manière adverse (602), le modèle biométrique enrôlé et le modèle biométrique perturbé de manière adverse étant dans un sous-espace transformé ;
le calcul d'une distance (F) entre le modèle biométrique enrôlé et le modèle biométrique perturbé de manière adverse dans le sous-espace transformé ; et
la détermination que le modèle biométrique perturbé de manière adverse et les échantillons perturbés de manière adverse sont adverses lorsque la distance calculée est supérieure à un seuil (t').

4. Support non transitoire lisible par ordinateur sur lequel sont stockées des instructions logicielles qui, lorsqu'elles sont exécutées par un processeur, amènent le processeur à réaliser le procédé selon l'une quelconque des revendications précédentes.

5. Système, comprenant :
une mémoire ;
un processeur couplé à la mémoire ; et
un composant logiciel exécuté par le processeur qui est configuré pour réaliser le procédé selon l'une quelconque de la revendication 1 à la revendication 3.
